# EUROPEAN PATENT APPLICATION

(11) **EP 2 749 907 A1**
(43) Date of publication of application: **02.07.2014**
(21) Application number: 12306709.2
(22) Date of filing: 28.12.2012
(51) Int. Cl.: G01V 1/40, E21B 47/00, G01V 1/48, G01V 3/20, G06F 17/40

(54) **Well-logging viewer with icons**

(71) Applicant: Services Pétroliers Schlumberger, 75007 Paris (FR); SCHLUMBERGER TECHNOLOGY B.V., 2514 JG The Hague (NL); Schlumberger Holdings Limited, Tortola 1110 (VG); PRAD Research and Development Limited, Road Town, Tortola 1110 (VG)
(72) Inventor: Wyts, Michel, 92142 Clamart Cedex (FR)
(74) Representative: Rzaniak, Martin

(57) **Abstract**

A well-logging system for a geological formation having a borehole therein includes a well-logging tool to be positioned within the borehole. The well-logging tool includes electrical current flow pads to press outwardly against adjacent portions of the borehole and establish respective current flow paths therethrough, and sensors to sense pressure and current flow for each of the electrical current flow pads. The system may also include a processor coupled to a display to display an image including icons representative of the sensed pressure and current flow for each of the electrical current flow pads. The icons may be assigned different colors to indicate status.

## Description

### Background

Well-logging instruments are used in wellbores to make, for example, formation evaluation measurements to infer properties of the formations surrounding the borehole and the fluids in the formations. Such well-logging instruments may include electromagnetic instruments, nuclear instruments, nuclear magnetic resonance (NMR) instruments, and caliper instruments, for example.

Well-logging instruments may be moved through a wellbore on an armored electrical cable ("wireline") after the wellbore had been drilled. Such wireline tools are still used extensively. However, the desire for information while drilling the borehole gave rise to measurement-while-drilling ("MWD") tools and logging-while-drilling ("LWD") instruments, which are generally housed in special drill collars forming part of a string of drilling tools used to drill the wellbore. By collecting and processing such information during the drilling process, the wellbore operator can modify or adjust selected actions within the drilling operation to optimize wellbore performance and/or drilling performance.

MWD instruments may provide drilling parameter information such as axial force (weight) applied to a drill bit at the bottom of the drill string, torque applied to the drill string, wellbore temperature, wellbore fluid pressure, wellbore geodetic or geomagnetic direction, and wellbore inclination from vertical. LWD instruments may provide formation evaluation measurements such as formation electrical resistivity, porosity, and NMR relaxation time distributions. MWD and LWD instrument often have components similar in function to those provided in wireline tools (e.g., transmitting and receiving antennas), but MWD and LWD tools may be constructed to operate in the harsh environment of drilling. The terms MWD and LWD are often used interchangeably, and the use of either term in this disclosure will be understood to include both the collection of formation and wellbore information, as well as data on movement and placement of the drilling assembly.

Some well-logging instruments determine formation volumetrics. Other well-logging instruments determine the shape and diameter of the borehole using mechanical caliper pads that press outwardly against adjacent portions of the borehole. The pads often include electrical current flow pads that inject current through the pads into the borehole for resistivity measurements, such as mud resistivity. The pads may also measure temperature within the borehole.

### Summary

This summary is provided to introduce a selection of concepts that are further described below in the detailed description. This summary is not intended to identify key or essential features of the claimed subject matter, nor is it intended to be used as an aid in limiting the scope of the claimed subject matter.

A well-logging system for a geological formation having a borehole therein may include a well-logging tool to be positioned within the borehole and a plurality of electrical current flow pads that press outwardly against adjacent portions of the borehole and establish respective current flow paths. The system may further include a plurality of sensors to sense pressure and current flow for each of the plurality of electrical current flow pads, a display and a processor to display an image as a plurality of icons representative of the sensed pressure and current flow for each of the plurality of electrical current flow pads.

A related well-logging viewer cooperates with a well-logging tool to be positioned within a borehole of a geographical formation and may include a plurality of electrical current flow pads that press outwardly against adjacent portions of the borehole and establish respective current flow paths. A plurality of sensors sense pressure and current flow from each of the plurality of electrical current flow pads. The well-logging viewer may further include a display and processor to cooperate with the well-logging tool to display an image that may include a plurality of icons representative of a sensed pressure and current flow for each of the plurality of electrical current flow pads.

A related well-logging viewing method may include operating a well-logging tool positioned within a borehole of a geological formation. The well-logging tool may include a plurality of electrical flow pads to press outwardly against adjacent portions of the borehole and establish respective current flow paths therethrough. A plurality of sensors sense pressure and current flow for each of the plurality of electrical current flow pads. The method may further include operating a processor coupled to a display to display an image that may include a plurality of icons representative of the sensed pressure and current flow for each of the plurality of electrical current flow pads.

### Brief Description of the Drawings

FIG. 1 is a schematic diagram illustrating a well-logging system in accordance with an example embodiment.

FIG. 2 is a schematic diagram of a well-logging tool which may be used with the system of FIG. 1.

FIG. 3 is a schematic diagram of the well-logging viewer which may be used with the system of FIG. 1.

FIG. 4 is another schematic diagram of the well-logging viewer having icons rotated by an angle corresponding to the relative bearing of the well-logging tool in the borehole.

FIG. 5 is a diagram of the well-logging viewer showing a representation of a caliper gauge.

FIG. 6 is a diagram for an arrow for an icon used on the display to show injection is "off."

FIGS. 7-10 are diagrams of arrows for icons used on the display to show injection is "on" and different aspects of Log Quality Control (LQC).

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout.

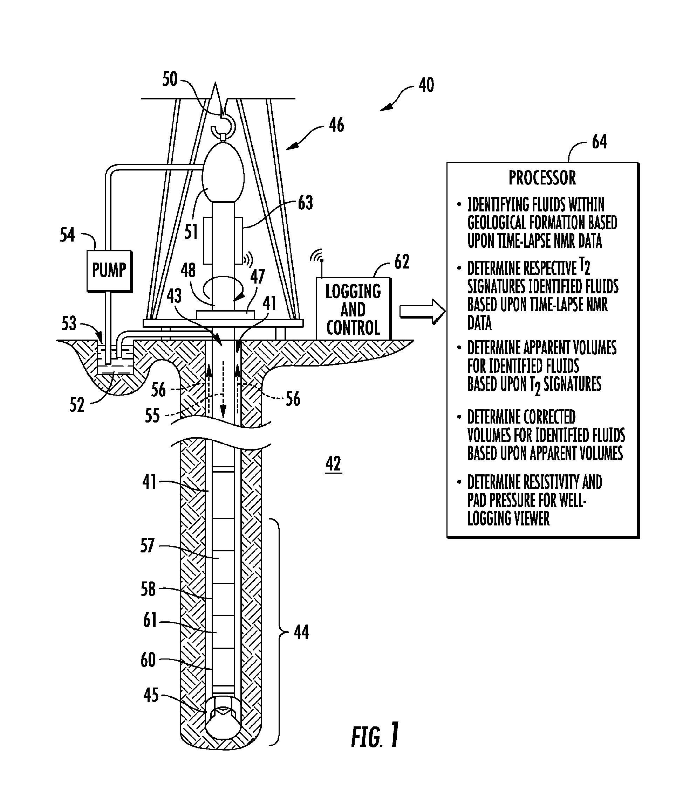

FIG. 1 illustrates a well site system **40** in which various embodiments may be implemented. In the illustrated example, the well site is a land-based site, but the techniques described herein may also be used with a water or offshore-based well site as well. In this example system, a borehole **41** is formed in a subsurface or geological formation **42** by rotary drilling, for example. Some embodiments may also use directional drilling, as will be described below.

A drill string **43** is suspended within the borehole **41** and has a bottom hole assembly ("BHA") **44** which illustratively includes a drill bit **45** at its lower end. The system **40** further illustratively includes a platform and derrick assembly **46** positioned over the borehole **41.** The assembly **46** illustratively includes a rotary table **47,** kelly **48,** hook **50** and rotary swivel **51.** The drill string **43** may be rotated by the rotary table **47** which engages the kelly **48** at the upper end of the drill string. The drill string **43** is illustratively suspended from the hook **50,** which is attached to a traveling block (not shown), through the kelly **48** and the rotary swivel **51** which permits rotation of the drill string relative to the hook. A top drive system (not shown) may also be used to rotate and axially move the drill string **43,** for example.

In the present example, the system **40** may further include drilling fluid or mud **52** stored in a pit **53** formed at the well site (or a tank) for such purpose. A pump **54** delivers the drilling fluid **52** to the interior of the drill string **43** via a port in the swivel **51,** causing the drilling fluid to flow downwardly through the drill string as indicated by the directional arrow **55.** The drilling fluid exits the drill string **43** via ports or nozzles (not shown) in the drill bit **45,** and then circulates upwardly through an annular space ("annulus") between the outside of the drill string and the wall of the borehole, as indicated by the directional arrows **56.** The drilling fluid lubricates the drill bit **45** and carries formation cuttings up to the surface as it is cleaned and returned to the pit **53** for recirculation.

The BHA **44** of the illustrated embodiment may include a logging-while-drilling ("LWD") module **57,** a measuring-while-drilling ("MWD") module **58,** a rotary steerable directional drilling system and motor **60,** and the drill bit **45.**

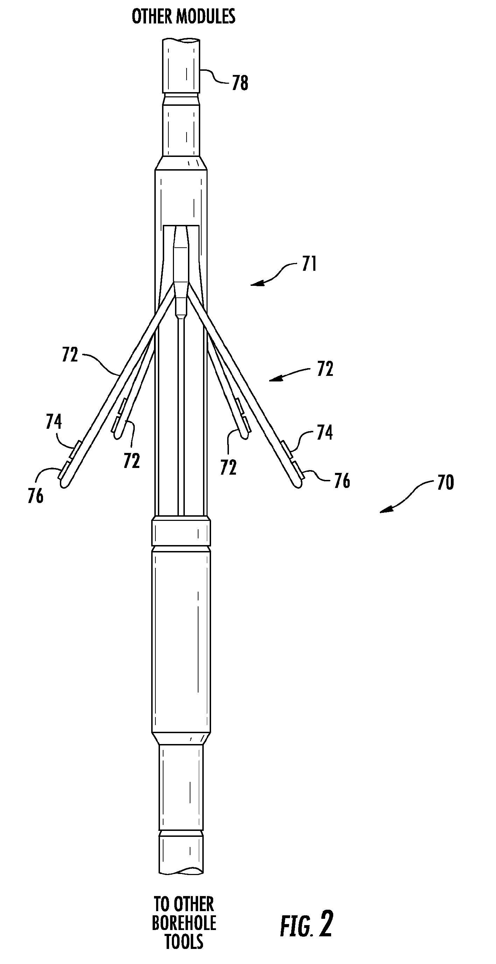

The LWD module **57** may be housed in a special type of drill collar, as is known in the art, and may include one or more types of well-logging instruments. It will also be understood that optional LWD and/or MWD modules **61** may also be used in some embodiments, such as a well-logging tool **70** for borehole measurement and injecting currents as shown at FIG. 2 and described below. (References, throughout, to a module at the position of **57** may mean a module at the position of **61** as well). The LWD module **57** may include capabilities for measuring, processing, and storing information, as well as for communicating the information with the surface equipment, e.g., to a logging and control unit **62,** which may include a computer and/or other processors for decoding information transmitted from the MWD and LWD modules **57, 58** and recording and calculating parameters therefrom. Signals may be transmitted from a radio transmitter **63** to the logging and control unit **62.** The information provided by the MWD and LWD modules **57, 58** may be provided to a processor **64** (which may be off site, or in some embodiments may be on-site as part of the logging and control unit **62,** etc.) for determining volumetric information regarding constituents within the geological formation **42** and borehole measurements and resistivity as discussed further below.

FIG. 2 shows a well-logging tool **70** that is used with the well-logging system shown in FIG. 1 and positioned within the borehole. In this example, the well-logging tool **70** is formed as an Environmental Measurement Sonde (EMS) that determines the shape of the borehole over a wide range of borehole sizes and measures the borehole cross-section at different orientations to give detailed information on borehole geometry. These measurements result in a better environmental correction of imaging tool data and improved borehole stress analysis and estimation. This tool **70** includes an Environmental Measurement Mechanical (EMM) module **71** having four independent arms **72** that pivot or extend outward to make caliper measurements. Each arm supports an electrical current flow pad **74** that together form a plurality of electrical current flow pads for the tool **70** and press outwardly against adjacent portions of the borehole and establish respective current flow paths therethrough. Each arm **72** also supports a sensor **76** to form a plurality of sensors on the tool **70** to sense pressure and current flow for each of the plurality of electrical current flow pads **74.**

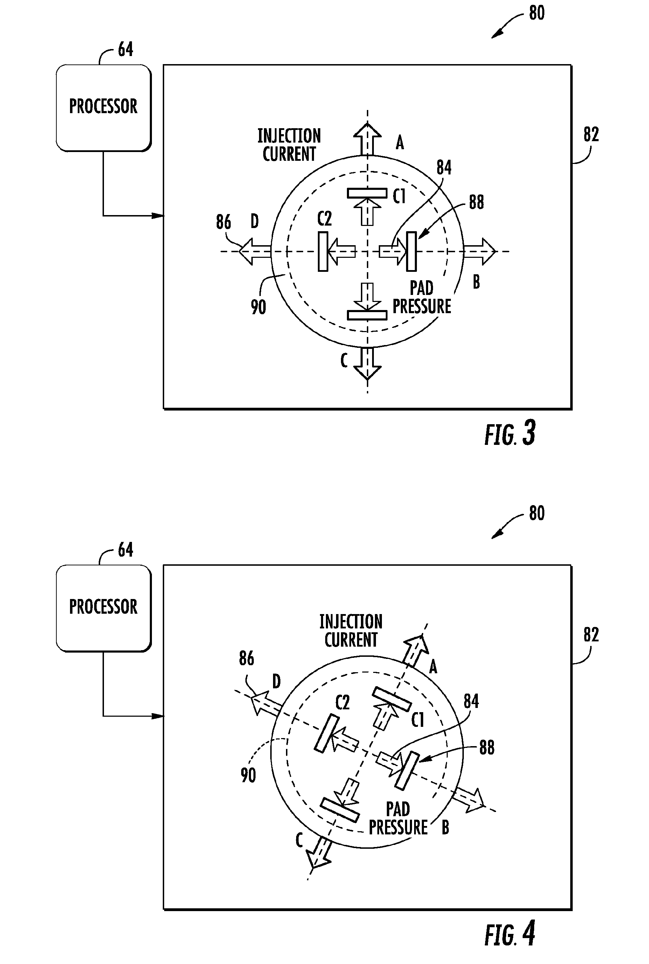

The well-logging accomplished by this tool **70** may measure mud resistivity and mud temperature. It may also measure acceleration along the tool axis using an embedded accelerometer within the tool in another module. A single axial accelerometer may be used and data from that accelerometer is used to provide accurate depth matching of the borehole measurements, tool speed, and estimated hole deviation. Different modules may be supported within the tool, including a Digital Telemetry Cartridge (DTC), Environmental Measurement Sonde Adapter (EMA) and Environmental Measurement Cartridge (EMC) **78** shown above the EMM **71.** Signals are transmitted back from the sensors **76** on the arms **72** upward along the tool and drill string to the logging and control unit **62.** A well-logging viewer **80** is illustrated that includes the processor **64** and display **82** (FIG. 3) to display an image as a plurality of icons representative of the sensed pressure and current flow for each of the plurality of electrical current flow pads **74.** An algorithm based on the oval-radii measurements obtained from the tool **70** can give the best-fit ovality and provide borehole geometry with long- and short-axis diameters, their orientation and the tool arm positions.

FIG. 3 is a diagram showing the well-logging viewer **80,** which in this example includes the display **82** and processor **64** that cooperates with the well-logging tool **70** to display on the display **82** an image as a plurality of icons representative of the sensed pressure and current flow for each of the plurality of electrical current flow pads. As illustrated, this plurality of icons includes a respective first icon **84** for sensed pressure for each electrical current flow pads **74** and a respective second icon **86** for sensed current flow for each electrical current flow pad. This well-logging viewer **80** presents to a user at LOG time the real sonde behavior at a glance. By using this well-logging viewer **80,** the user will not have to check many data channels such as caliper 1, caliper 2, pad pressure, relative bearing, current injection status corresponding to the excitation emitter or various LQC (log quality control) channels. By using this viewer, a user will not have to check these different data channels because the symbolic image of a section of the tool **70** is shown related to the borehole section. This well-logging viewer **70** will not replace the usual gauges view or alarms and more particularly the hazards alarms, but in TLC (tough logging conditions) it will be helpful.

As shown in FIG. 3, each first icon **84** includes an image of a first arrow and a rectangle as an adjacent plate **88** with the plate representative of the electrical current flow pad to show caliper and pad pressure. The processor **64** displays each first arrow of the first icon **84** to have a predetermined color based upon the sensed pressure relative to a pressure threshold so that the pad pressure is illustrated. Each second icon **86** is formed as a second arrow and the processor displays each second arrow to have a predetermined color based upon the sensed current flow relative to a current flow threshold. The processor also displays a borehole representation surrounding the first icons **84** and within the second icons **86** as a bit size circle **90** shown in FIGS. 3 and 4. The first and second icons **84, 86** may be shown at a rotational angle relative to a reference rotational angle to illustrate the relative bearing of the tool **70** within the borehole as shown in FIG. 4 with a 25 degree rotation.

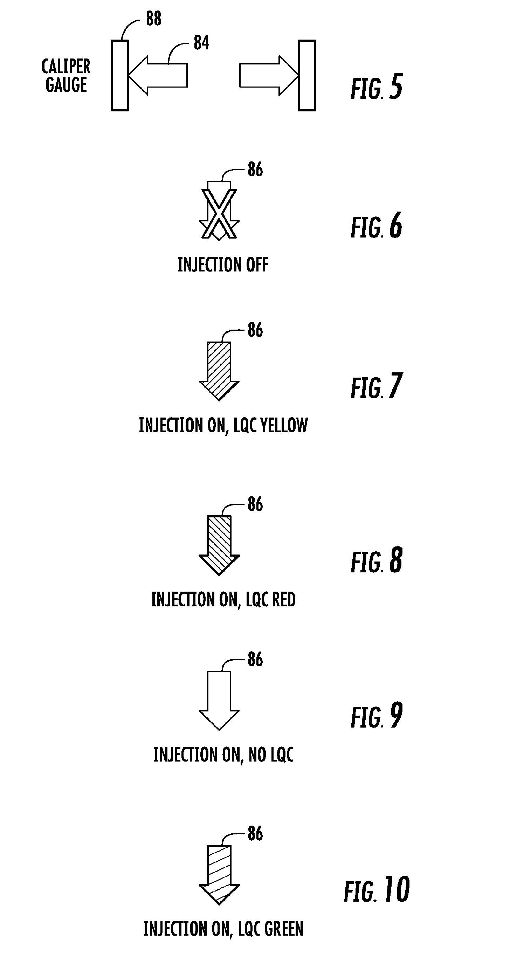

The four arrows for the first icon **84** shown near the center and associated each with the rectangle as a plate **88** represent the four pads on the respective arms **72** of the tool **70** as shown in FIG. 2 and also illustrates the caliper size by the distance between the two rectangles (FIG. 5). This image is modified depending on the pad measurements in the borehole as transmitted through normal signal channels, for example, caliper 1 (CAL1) or caliper 2 (CAL2) for a four pad caliper tool **70** as illustrated in FIG. 3 corresponding to a FMI (Full Bore Microresistivity Imager). The position of the arrows and rectangles change during the LOG, but the arrow size is fixed in this example. The color of the four arrows of the first icon **84** represents the pad pressure with the usual log quality control (LQC) behavior. For example, if an arrow is red for the first icon **84,** this signifies the pad pressure (PP) is bad. An example of poor pad pressure indicative of poor pad contact with the well of the borehole is shown with two opposing red arrows in FIG. 5. If the arrow is green, however, then the pad pressure is acceptable. Between these points, several colors may be used. The four outer or peripheral arrows for the second icon **86** indicate if a current is being sent to the borehole formation.

It is possible to place a "X" on any of the arrows to describe the pad's activation. FIG. 6 shows an "X" placed on an arrow for the second icon **86** indicating that the current injection is "off." A tool application may use a four-pad well-logging viewer as illustrated in FIGS. 3 and 4, but the number of pads and arms **70** on which the pads are supported can vary, for example, 1,2,3,4 or more different pads supported on like number of arms. The well-logging viewer **80** shows the availability of pad pressure and the log quality control (LQC) with the availability of any orientation channels. Signal inputs may include the number of pads, whether any pad pressure is available, such as a red arrow indicating bad pad pressure and a green arrow indicating adequate pad pressure and a yellow arrow indicating limited pad pressure. The viewer **80** may also show whether any pad application log quality control (LQC) signal is available. An injection mode can be shown as "yes" (a green arrow) or "no" (a red arrow).

Dynamic data is obtained during logging that includes the pad pressure and the orientation data such as the relative bearing for a pad and arm location, for example, P1NO corresponding to DC, pad 1 north. Caliper data may include the bit size and pad application data channel for different pads. The display **82** will be updated in one example at six inches depth sampling.

The arrow color for the icons may correspond to "not filled" (or clear), red, yellow and green. For example, a clear arrow for the second icon **86** may signify the current injection is "on" but there is no log quality control signal while a green arrow for the second icon **86** may indicate that the current injection is "on" and there is adequate log quality control. For the first icon **84** corresponding to pad pressure, a red arrow may signify a pad has bad pressure and the pad is not adequately contacting the borehole wall. A yellow arrow, on the other hand, may signify a warning of possible problems, such as some pad pressure is available against the borehole wall, but the pressure is inadequate. The center of the image shown in FIGS. 3 and 4 is the center of the tool represented on the display **82** and the size is fixed. The distance between the two arrows for the first icons as shown in FIG. 5, for example, is proportional to the caliper value. If there are two opposed arms **72** on a tool **70,** two pads are represented as an image opposed to each other as in FIG. 5. If there is one arm, there may be one pad shown with one arrow. The caliper distance refers to the diameter.

FIGS. 7-10 indicate different arrows for the second icon **86** when the current injection is "on." FIG. 7 shows a yellow arrow indicative that injection current is "on", but indicating poor log quality control (LQC). FIG. 8 is a red arrow indicative that injection current is "on" but LQC is bad. FIGS. 9 and 10 are clear and green arrows respectively indicating injection current is "on" but there are no LQC signals (FIG. 9) as a clear arrow and LQC is good as a green arrow. The arrows are linked to an external circle as shown in FIG. 4 for purposes of reference. The bit size, however, is shown by the dashed circle **90** in FIGS. 3 and 4. The programming code for this viewer **80** may be written in C++ or similar code. The display **82** can be any type of display acceptable to a user, including small displays supported by portable devices.

A well-logging viewing method is also disclosed in which the method includes operating the well-logging tool **70** positioned within a borehole of a geological formation. The well-logging tool **70** may include a plurality of electrical current flow pads as illustrated in FIGS. 2 and 3 to press outwardly against adjacent portions of the borehole and establish a respective current flow path therethrough. A plurality of sensors sense the pressure and current flow for each of the plurality of electrical current flow pads. The method includes operating a processor **64** coupled to the display **82** to display an image as a plurality of icons representative of the sensed pressure and current flow for each of the plurality of electrical current flow pads. The processor is operated to display a first arrow to have a predetermined color based on the sensed pressure relative to a pressure threshold and displaying a second arrow to have a predetermined color based upon the sensed current flow relative to a current flow threshold.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A well-logging system (40) for a geological formation having a borehole (41) therein comprising:
a well-logging tool (70) to be positioned within the borehole and comprising a plurality of electrical current flow pads (74) to press outwardly against
adjacent portions of the borehole and establish respective current flow paths therethrough, and
a plurality of sensors (76) to sense pressure and current flow for each of said plurality of electrical current flow pads and **characterized by**;
a display (82); and
a processor (64) to display on said display an image comprising a plurality of icons (84, 86) representative of the sensed pressure and current flow for each of said plurality of electrical current flow pads.

2. The well-logging system according to Claim 1 wherein said plurality of icons comprises:
a respective first icon (84) of sensed pressure for each electrical current flow pad; and
a respective second icon (86) of sensed current flow for each electrical current flow pad.

3. The well-logging system according to Claim 2 wherein each first icon comprises a first arrow and a plate (88) adjacent thereo.

4. The well-logging system according to Claim 3 wherein said processor (64) is also to display each first arrow to have a predetermined color based upon the sensed pressure relative to a pressure threshold.

5. The well-logging system according to Claim 2 wherein each second icon (86) comprises a second arrow.

6. The well-logging system according to Claim 2 wherein said processor (64) is also to display a borehole representation surrounding the first icons (84) and within the second icons (86).

7. The well-logging system according to Claim 1 wherein said plurality of electrical current flow pads (74) comprises four pads arranged in opposing pairs.

8. A well-logging viewer (80) to cooperate with a well-logging tool (70) to be positioned within a borehole of a geological formation, the well-logging tool (70) comprising a plurality of electrical current flow pads (74) to press outwardly against adjacent portions of the borehole and establish respective current flow paths therethrough, and a plurality of sensors (76) to sense pressure and current flow for each of the plurality of electrical current flow pads, the well-logging viewer and **characterized by**:
a display (82); and
a processor (64) to cooperate with the well-logging tool to display on said display an image comprising a plurality of icons (84, 86) representative of the sensed pressure and current flow for each of the plurality of electrical current flow pads.

9. The well-logging viewer according to Claim 8 wherein said plurality of icons (84, 86) comprises:
a respective first icon (84) of sensed pressure for each electrical current flow pad; and
a respective second icon (86) of sensed current flow for each electrical current flow pad.

10. The well-logging viewer according to Claim 9 wherein each first icon (84) comprises a first arrow and a plate (88) adjacent thereto; and wherein said processor (64) is also to display each first arrow to have a predetermined color based upon the sensed pressure relative to a pressure threshold.

11. The well-logging viewer according to Claim 10 wherein said processor (64) is also to display a borehole representation surrounding the first icons and within the second icons, and display the borehole representation, and first and second icons at a rotational angle relative to a reference rotational angle.

12. A well-logging viewing method comprising:
operating a well-logging tool (70) positioned within a borehole (41) of a geological formation, the well-logging tool comprising a plurality of electrical current flow pads (74) to press outwardly against adjacent portions of the borehole and establish respective current flow paths therethrough, and a plurality of sensors (76) to sense pressure and current flow for each of the plurality of electrical current flow pads and **characterized by**; and
operating a processor (64) coupled to a display (82) to display on the display an image comprising a plurality of icons (84, 86) representative of the sensed pressure and current flow for each of the plurality of electrical current flow pads.

13. The method according to Claim 12 wherein the plurality of icons comprises:
a respective first icon (84) of sensed pressure for each electrical current flow pad; and
a respective second icon (86) of sensed current flow for each electrical current flow pad.

14. The method according to Claim 13 wherein each first icon comprises a first arrow and a plate (88) adjacent thereto; and wherein operating the processor (64) comprises operating the processor to display each first arrow to have a predetermined color based upon the sensed pressure relative to a pressure threshold.

15. The method according to Claim 13 wherein each second icon (86) comprises a second arrow; and wherein operating the processor (64) comprises operating the processor to display each second arrow to have a predetermined color based upon the sensed current flow relative to a current flow threshold.
